(19)

Europäisches
Patentamt
European
Patent Office
Office européen
des brevets

(11) **EP 1 865 300 A1**

(12) **EUROPEAN PATENT APPLICATION**

(43) Date of publication:
**12.12.2007 Bulletin 2007/50**

(51) Int Cl.:
***G01M 3/18*** *(2006.01)*

(21) Application number: **06115064.5**

(22) Date of filing: **07.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Basell Poliolefine Italia S.r.l.**
**20124 Milano (IT)**

(72) Inventors:
  • **Maresi, Bruno Davide**
    **47826, Verucchio (RN) (IT)**
  • **Alessandrini, Gino,**
    **Basell Poliolefine italia**
    **44100, Ferrara (IT)**

  • **Sorghi, Ernesto**
    **44100, Ferrara (IT)**
  • **Mazzullo, Salvatore,**
    **Basell Poliolefine Italia**
    **45100, Rovigo (IT)**
  • **De Palo, Roberto**
    **44100, Ferrara (IT)**
  • **Costantini, Enrico**
    **44100, Ferrara (IT)**

(74) Representative: **Giberti, Stefano**
    **Basell Poliolefine Italia S.r.l.**
    **Intellectual Property**
    **P.le Privato G. Donegani 12**
    **Casella Postale 19**
    **44100 Ferrara (IT)**

(54) **Self-diagnostic pipes**

(57)    Method to identify leakages in plastic pipes and in a network of plastic pipes and multilayer plastic pipes suitable for carrying out the method.

Figure 1A

EP 1 865 300 A1

Figure 1B

Figure 1C

**Description**

The present invention relates to a method to identify leakages in plastic pipes and in a network of plastic pipes. It further relates to self diagnostic plastic pipes and network of pipes.

It is widely known in the art that one of the most relevant problems for buried or chased in network of plastic pipes is to detect the failure of pipes and to determine the position of leakages of the fluid flowing into the network.

Several detecting systems and methods have been proposed to solve this problem. Among others, the International patent application WO03/076890 discloses a water leakage detecting system which is applicable either to plastic or steel pipes, said system comprising providing pipes with at least two conducting wires on the outer circumference, connecting the pipes and the conducting wires, deliver a router control signal along the conductive wires to detect the presence of leakages. This detecting system is not however suitable for the application on plastic pipes already existing on the market, since the connecting wires have to be wrapped around the pipes while the pipes are manufactured. The US patent 6,265,880 discloses a method for detecting conduit chafing, said method comprising wrapping a sensing (conductive) element around a conduit. However, the method is suitable for detecting the chafing of the sensing element produced by external chafing agents.

Therefore, there is still the need of an effective method for the determination of failure of plastic pipes, in particular of underground plastic pipes, and for self detectable plastic pipes using said method.

The method according to the invention can be conveniently used to detect the failure of multilayer plastic pipes comprising at least one inner layer of plastic material, at least one layer of a conductive material (solid conductor) adhered to said inner layer and at least one further plastic layer adhered to the surface of the conductive material opposite to the surface adhered to the inner plastic layer, wherein the fluid present inside the pipe is a conductive fluid (fluid conductor) and to determine the position of the failure along the pipes. The method of the instant invention is particularly suitable for detecting failure and determine the failure position in pipes or networks of pipes wherein the conductive fluid present inside the pipes fills up completely the inner part of the pipes. More preferably, the method of the invention is suitable for detecting failure and determining the failure position in in-pressure pipes or in networks of in-pressure pipes, like for example networks of municipal water.

The method of the invention is based on the fact that the at least one layer of conductive material can be considered a cylindrical solid conductor having resistance

$$Rs = \rho_s \frac{L}{S_S}$$

where $\rho_s$ is the resistivity of the solid conductor, L is the length of the solid conductor (equal to the pipe length) and Ss is the cross-sectional area of the solid conductor and can be calculated as $Ss = \pi r^2$ where $r^2$ is the thickness of the solid conductor.

The conductive fluid present inside the pipe or the network of pipes is also a cylindrical fluid conductor having resistance

$$Rf = \rho_f \frac{L}{Sf}$$

where $\rho_f$ is the resistivity of the fluid, L is the length of the fluid conductor which is equal to the pipe length and Sf is the cross-sectional area of the fluid conductor which corresponds to the internal cross-sectional area of the pipe.

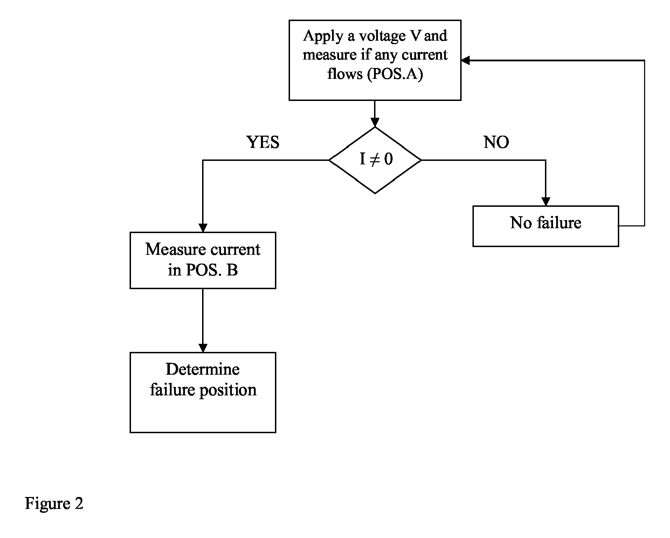

The method of the invention is particularly suitable for detecting the presence of a failure in a multilayer plastic pipe wherein the fluid conductor present inside the pipe has a conductivity comprised in the range from 5 to $10^5$ $\mu$S·m$^{-1}$. Figure 2 is a diagrammatic representation of the method's steps.

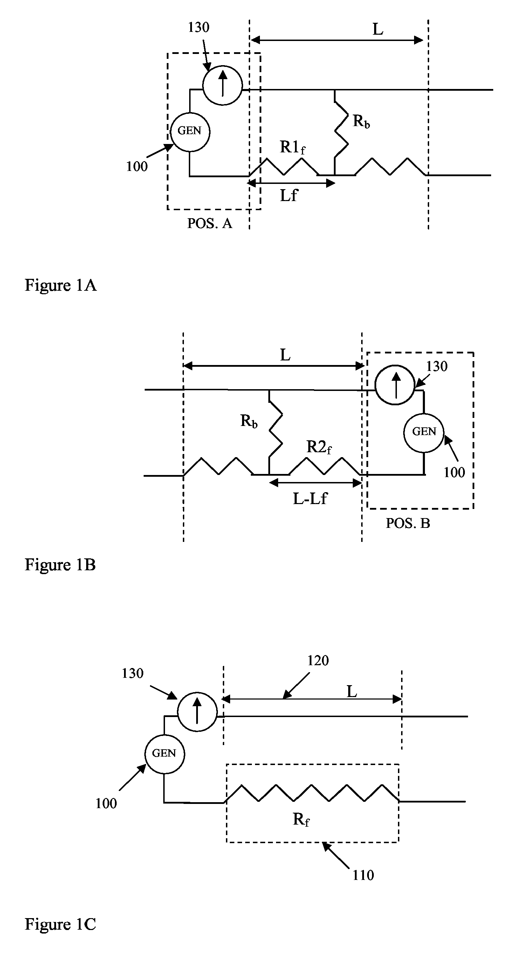

The method of the instant invention may be conveniently illustrated with reference to Figure 1A and 1B representing the equivalent circuits in position A and B of the multilayer plastic pipes.

The method of the instant invention for detecting the failure of a multilayer plastic pipe comprising at least one inner layer of plastic material, at least one layer of a conductive material (solid conductor) adhered to said inner plastic layer and at least one further plastic layer adhered to the surface of the solid conductor opposite to the surface adhered to the inner plastic layer, wherein the fluid present inside the pipe is a conductive fluid (fluid conductor) comprises the following steps:

(i) electrically connect in series or in parallel, preferably in parallel, at least one electrical generator (100) and at least one electric current measuring instrument (130) to the solid conductor and to the fluid conductor present inside the pipe. The electric current generated by the electrical generator may be alternate or continuous and may have either low or high frequency;

(ii) apply a voltage V(A) and measure the flowing current I(A) in position A. If no failure is present along the pipe the measured current is zero because the equivalent circuit of Figure 1A is open and no current flows. If a failure is present along the pipe, the fluid conductor present inside the pipe escapes from the pipe creating a contact between the two conductors and the measured current is no longer zero. The equivalent circuit in case of a failure is shown in Figure 1A. The current value measured in position A depends on the total resistance of the circuit through Ohm's law, from which the value of Rtot(A) can be calculated. The total resistance of the circuit of Figure 1B is defined by the formula:

$$Rtot\ (A) = R1_f + Rb$$

on the assumption that the resistance of the solid conductor (Rs) is negligible if compared to the resistances $R1_f$ and Rb. $R1_f$ is the resistance of the fluid conductor defined as

$$R1f = \rho_f \frac{L_f}{Sf}$$

where $\rho_f$ and Sf are as defined above and Lf is the length of the fluid conductor which corresponds to the distance between the pipe end in position A and the position of the failure along the pipe. Rb is the resistance of the resistor created by the conductive fluid escaping through the failure;

(iii) if I(A) is different from zero, apply a voltage V(B), equal or different from the voltage V(A), in position B and measure the flowing current I(B). The equivalent circuit for the measurement in position B is shown in Figure 1B. The value of the current measured in position B depends on the total resistance of the circuit, the total resistance of the circuit of Figure 1B being defined by the equation

$$Rtot\ (B) = R2_f + Rb$$

on the assumption that the resistance of the solid conductor is negligible if compared to the resistances $R2_f$ and Rb. $R2_f$ is the resistance of the fluid conductor defined as

$$R2f = \rho_f \frac{L - L_f}{Sf}$$

where $\rho_f$ and Sf are as defined above and L-Lf is the length of the fluid conductor which corresponds to the distance between the pipe end in position B and the position of the failure along the pipe. Rb is the resistance of the resistor created by the conductive fluid escaping through the failure;

(iv) determine the failure position. The failure position, i.e. the value of Lf, is determined by simultaneously solving the following system of equations:

$$Rtot\ (A) = \rho_f \frac{L_f}{Sf} + Rb \qquad\qquad (1)$$

$$Rtot\ (B) = \rho_f \frac{L - L_f}{Sf} + Rb \qquad\qquad (2)$$

To apply the method of the invention the resistivity of the fluid conductor $\rho_f$ must be known. If the value of $\rho_f$ is not known, the method of the invention for determining the position of a failure along a multilayer plastic pipe comprises a further step (v) to be carried out when the pipe is intact and no failure is present.

The equivalent circuit representing the intact pipe is shown in Figure 1C. Step (v) comprises closing the equivalent circuit of Figure 1C by electrically connecting the solid conductor (120) having total length L and the fluid conductor (110), applying a voltage V(0) and measuring the flowing electrical current I(0). The total resistance of the circuit Rtot (0) can be calculated with the Ohm's law Rtot(0) = V(0)/I(0). On the assumption that the resistance of the solid conductor is negligible if compared to the resistances $R_f$, the resistivity of the fluid conductor can be derived from the value of Rtot (0) by using the equation

$$Rtot(0) = \rho_f \frac{L}{Sf} \qquad\qquad (3)$$

wherein L and Sf are as defined above.

One of the advantages of the method of the instant invention is that it can be carried out by providing conventional multilayer plastic pipes already present on the market, said multilayer plastic pipes comprising at least one inner layer of plastic material, at least one layer of conductive material adhered to said plastic layer and at least one further layer of plastic material adhered to the solid conductor on the surface opposite to the surface adhered to the inner plastic layer, with means for electrically connecting the at least one electrical generator and at least one electric current measuring instrument to the at least one layer of conductive material.

Accordingly, the present invention further provides multilayer plastic pipes comprising at least one inner layer of plastic material, at least one layer of a conductive material (solid conductor) adhered to said inner layer and at least one further plastic layer adhered to the surface of the conductive material opposite to the surface adhered to the inner plastic layer, characterized in that

- the conductive layer is electrically connected in series or in parallel to at least one electrical generator and to at least one electric current measuring instrument; and in that
- the multilayer plastic pipes further comprise means for electrically connecting in series or in parallel the at least one electrical generator and the at least one electric current measuring instrument to a fluid (fluid conductor) present inside the pipe.

Preferably, the at least one electrical generator and the at least one electric current measuring instrument are electrically connected in series to the solid and the fluid conductors. Suitable means for electrically connecting the electrical generator and the electric current measuring instrument to the solid and the fluid conductors are electrodes, in particular metallic electrodes. Preferably, the electrodes are made of the same material as the solid conductor.

Figure 1C represents the equivalent circuit of the pipe of the preferred embodiment of the present invention. The at least one electrical generator (100) and the at least one electric current measuring instrument (130) are electrically connected to the fluid conductor (110) having resistance Rf present inside the pipe and to the solid conductor (120) having resistance Rs of the multilayer plastic pipe. The solid conductor is isolated from the fluid conductor by the inner plastic layer. The electrical generator (100), preferably a voltage generator, and the electric current measuring instrument (130), preferably a galvanometer, are inserted into the equivalent circuit of Figure 1C in series.

The plastic material forming the layers of the multilayer plastic pipe can be any plastic material conventionally used for pipes, in particular any plastic material used for in-pressure pipes. Examples of suitable plastic materials are polyethylene, polypropylene, polybutene and PVC. The at least one outer layer of conductive material adhered to the inner plastic layer may comprise any conductive or semiconductive material. Preferably, the material forming the at least one conductive layer is selected from materials having low resistivity so that the resistance Rs of the solid conductor is significantly smaller than the resistance of the fluid conductor Rf (Rs<<Rf) and the value of Rs can be overlooked in the equivalent circuit of Figures 1A to 1C. More preferably, the at least one layer of solid conductor is a metallic layer, an aluminum layer for example, which is normally coated onto the inner plastic layer, eventually in the presence of an adhesive layer which keeps the metallic layer firmly attached to the plastic layer.

The at least one further outer layer of plastic material adhered to the solid conductor on the surface opposite to the surface adhered to the inner plastic layer isolates the surface of the solid conductor from the surroundings when the multilayer plastic pipe is buried. The multilayer plastic pipe has a total length L, which is also the length of the solid and the fluid conductor. The diameter of the multilayer plastic pipes suitable for carrying our the method of the invention normally depends on the total length of the pipe and on the end use the pipes are intended for. For example, according to one embodiment, the multilayer plastic pipe of the invention is a polyethylene pipe, wherein the plastic layers comprise high density polyethylene, such as PE80 or PE100, and the conductive layer comprises Al, wherein the multilayer pipe has nominal diameter and thickness of the different layers conforming to the UNI EN 12201 or to UNI ISO 4437. The thickness of the conductive layer may be constant or may vary in connection with the nominal diameter of the multilayer plastic pipe, i.e. the higher the nominal diameter the thicker the conductive layer. Preferably, the nominal diameter of the multilayer plastic pipes ranges from 50 to 630 mm.

According to a preferred embodiment, the multilayer plastic pipes of the invention are three-layered plastic pipes having structure plastic/metallic layer/plastic.

Since pipes are normally joined to form a network of pipes using pipe joints, according to a first preferred embodiment, to carry out the method of the instant invention the at least one electrical generator and the at least one electric current measuring instrument are connected to the at least one layer of conductive material of a multilayer plastic pipe using a plastic pipe joint comprising electric connecting means.

Therefore, the present invention further provides active plastic pipe joints comprising at least one mean for electrically connecting in series or in parallel the at least one layer of conductive material of at least one multilayer plastic pipe comprising at least one inner layer of plastic material, at least one layer of a conductive material adhered to said inner layer and at least one further plastic layer adhered to the surface of the solid conductor opposite to the surface adhered to the inner plastic layer to at least one electrical generator and to at least one electric current measuring instrument and at least one mean for electrically connecting in series or in parallel the at least one electrical generator and at least one electric current measuring instrument to a fluid conductor present inside the pipe. Said suitable means are for examples electrodes made of the same material as the conductive layer of the plastic pipe. Plastic materials suitable for the active plastic joint are the same as described above for the multilayer plastic pipes of the invention. Examples of suitable plastic materials are polyethylene, polypropylene, polybutene and PVC. The active plastic joints may have any convenient shape conventionally used to join pipes. Preferably, the active plastic joints comprise means for electrically connecting in series or in parallel the at least one layer of conductive material of at least two multilayer plastic pipes.

The multilayer plastic pipes may be conveniently used to form a self-diagnostic network of multilayer plastic pipes. By self-diagnostic network of pipes is meant herein a network of pipe in which the presence of a failure and its position can easily be detected without human intervention on the network or on the pipes forming the network. The method of the invention is suitable for detecting the presence of a failure and for determining the position of the failure in a single multilayer plastic pipe and in a network of multilayer plastic pipes.

According to a first embodiment, to form a network of pipes, active plastic joints are provided comprising means for electrically connecting in series or in parallel the at least one layer of conductive material of at least two multilayer plastic pipes comprising at least one inner layer of plastic material, at least one layer of a conductive material adhered to said inner layer and at least one further plastic layer adhered to the surface of the conductive material opposite to the surface adhered to the inner plastic layer to at least one electrical generator and to at least one electric current measuring instrument and electric connecting means for electrically connecting in series or in parallel the at least one electrical generator and at least one electric current measuring instrument to a fluid conductor present inside the pipe.

The present invention provides multilayer plastic pipes comprising at least one inner layer of plastic material, at least one layer of a conductive material adhered to said inner layer and at least one further plastic layer adhered to the surface of the solid conductor opposite to the surface adhered to the inner plastic layer, characterized in that the multilayer plastic pipe further comprises at least one active plastic pipe joint comprising means for electrically connecting the at least one layer of conductive material of at least two multilayer plastic pipes in series or in parallel to at least one electrical generator and to at least one electric current measuring instrument and means for electrically connecting in series or in parallel the at least one electrical generator and at least one electric current measuring instrument to a fluid conductor present inside the pipe.

Accordingly, a self-diagnostic network of pipes comprises a plurality of multilayer plastic pipes, each multilayer plastic pipe comprising at least one inner layer of plastic material, at least one layer of a conductive material adhered to said inner layer and at least one further plastic layer adhered to the surface of the conductive material opposite to the surface adhered to the inner plastic layer wherein the multilayer plastic pipes are joined with an active plastic joint comprising means for electrically connecting in series or in parallel the at least one layer of conductive material of at least two multilayer plastic pipes to at least one electrical generator and to at least one electric current measuring instrument and electric connecting means for electrically connecting in series or in parallel the at least one electrical generator and at least one electric current measuring instrument to a fluid conductor present inside the pipe. Preferably, the at least one electrical generator and the at least one electric current measuring instrument are connected in series to the solid conductive layer and to the fluid conductor.

When the method of the instant invention is carried out on the network of multilayer plastic pipes according to the first embodiment, the electrical generator and the electric current measuring instrument connected to a first pipe in position A carry out the step (ii), i.e. applying a voltage and measuring a current in position A, for said first pipe and the step (iii), i.e. applying a voltage and measuring a current in position B, for a second pipe joined to said first pipe. The method of the invention is therefore carried out on each single multilayer plastic pipe forming the self-diagnostic network of pipes.

According to a second preferred embodiment, to form a self-diagnostic network of pipes conventional multilayer plastic pipes may be joined with passive joints. By passive joint is meant herein a plastic pipe joint comprising at least one layer of conductive material (solid conductor) suitable for electrically connecting at least two multilayer plastic pipes comprising at least one inner layer of plastic material, at least one layer of a conductive material adhered to said inner layer and at least one further plastic layer adhered to the surface of the conductive material opposite to the surface adhered to the inner plastic layer. According to a preferred embodiment, the passive pipe joints are multilayer plastic pipe joints comprising at least one inner layer of plastic material, at least one layer of a conductive material adhered to said inner layer and at least one further plastic layer adhered to the surface of the conductive material opposite to the surface adhered to the inner plastic layer. Preferably, the layer of plastic material of the passive pipe joint and the plastic material of the multilayer plastic pipes is the same material. More preferably, also the material forming the conductive layer of the passive pipe joint and the conductive material of the multilayer plastic pipe is the same material.

A self-diagnostic network of pipes may comprise at least two multilayer plastic pipes comprising at least one inner layer of plastic material, at least one layer of a conductive material adhered to said inner layer and at least one further plastic layer adhered to the surface of the solid conductor opposite to the surface adhered to the inner plastic layer, said multilayer plastic pipes further comprising at least one active plastic pipe joint comprising means for electrically connecting the at least one layer of conductive material of the at least two multilayer plastic pipes in series or in parallel to at least one electrical generator and to at least one electric current measuring instrument and means for electrically connecting in series or in parallel the at least one electrical generator and at least one electric current measuring instrument to a fluid conductor present inside the pipe, said multilayer plastic pipes being joined to a plurality of multilayer plastic pipes joined with passive pipe joints. In the self-diagnostic network of pipes of the second embodiment the multilayer plastic pipes comprising the active plastic joint are connected to the multilayer plastic pipes joined with passive joints, provided that the first and the last multilayer plastic pipe forming the network is a multilayer plastic pipe comprising an active plastic joint.

In the self-diagnostic network of plastic pipes of the second embodiment, the method of the instant invention is carried out on the plurality of multilayer plastic pipes joined with passive joints comprised between two active plastic joints, i.e. the length of the solid and the fluid conductors corresponds to the distance between two active plastic joints. Accordingly, the length L of the solid conductor is defined as $L(tot)=\Sigma Li+\Sigma Lj$, wherein Li is the length of each single multilayer plastic pipe comprised between two active plastic joint and Lj is the length of the solid conductor present in each passive pipe joint comprised between two active plastic joints.

The method of the instant invention is suitable for detecting and determining the position of the failure in pipes or in a network of pipes when said pipe or network of pipes buried or chased in, for example when they placed under the ground like network of municipal water supply systems or chased in walls or floors. The main advantage of the method of the invention is that the moment the presence of a failure in a pipe is detected, the position of the failure can be determined without human intervention on the pipe or network of pipes. This is particularly advantageous when pipes or networks of pipes are placed under the ground because the human intervention for repairing the failure or replacing the failed pipe section can be targeted to the exact position of the failure.

The following laboratory experimental tests have been performed to illustrate the method of the invention in greater detail, without limiting it to any particular embodiment.

The test have been carried out on a multilayer plastic pipe having a nominal diameter of 0.110 m, said pipe comprising an inner layer of polybutene coated with an aluminum outer layer (solid conductor) and adhered to a further plastic layer. Municipal water was the fluid conductor inside the pipe. The solid and the liquid conductor have a length of L=2.04 m. A voltage generator and a galvanometer were connected in series to the aluminum layer and to the water inside the pipe in position A. The electric circuit present in the intact pipe was closed by electrically connecting the aluminum layer with the water present inside the pipe in position B. A voltage of $V_{DC}(0)$ of 24.02 V was applied and a current I(0) of 1.50 mA was measured. The calculated value of Rtot(0) was 16 K$\Omega$ and the resistivity of the municipal water was calculated from formula (3) to be 47.68 $\Omega$m.

A hole simulating the pipe failure was made in the pipe 0.70 m from the edge of the pipe, i.e. from position A. Water escaping the pipe created a contact between the two conductors. A voltage $V_{DC}(A)$ of 24.02 V was applied in position A and a current I(A) of 1.96 mA was measured. The calculated value of Rtot(A) was of 12 K$\Omega$. A voltage $V_{DC}(B)$ of 24.02 V was applied in position B and a current I(B) of 1.46 mA was measured. The value Rtot(B) was calculated

7

to be of 16.45 KΩ. From formulas (1) and (2) the position of the hole along the pipe was calculated to be 0.74 m from position A.

The method of the invention has therefore been proven as suitable for detecting the presence of a failure along the pipe and to determine the position of the failure with an error of less than 5% with respect to the effective position.

## Claims

1. Method for detecting the failure of a multilayer plastic pipe comprising at least one inner layer of plastic material at least one layer of a conductive material adhered to said inner layer and at least one further plastic layer adhered to the surface of the solid conductor opposite to the surface adhered to the inner plastic layer, wherein the fluid present inside the pipe is a conductive fluid comprising the following steps:

    (i) electrically connect in series or in parallel at least one electrical generator and at least one electric current measuring instrument to the solid conductor and to the fluid conductor present inside the pipe;
    (ii) apply a voltage V(A) and measure the flowing current I(A) in position A;
    (iii) a apply a voltage V(B), equal or different from the voltage V(A), in position B and measure the flowing current I(B); and
    (iv) determine the failure position.

2. The method of claim 1 further comprising the step (v) of determining the value of $\rho_f$ by electrically connecting the solid conductor and the fluid conductor when the pipe is intact, applying a voltage V(0) and measuring the flowing electrical current I(0).

3. The method of claim 1 or 2 wherein the at least one electrical generator and the at least one electric current measuring instrument are electrically connected in series to the solid conductor and to the fluid conductor present inside the pipe.

4. Multilayer plastic pipe comprising at least one inner layer of plastic material, at least one layer of a conductive material adhered to said inner layer and at least one further plastic layer adhered to the surface of the conductive material opposite to the surface adhered to the inner plastic layer, **characterized in that**

    - the conductive layer of the multilayer plastic pipes is electrically connected in series or in parallel to at least one electrical generator and to at least one electric current measuring instrument and **in that**
    - the multilayer plastic pipes further comprise means for electrically connecting in series or in parallel the at least one electrical generator and at least one electric current measuring instrument to a fluid (fluid conductor) present inside the pipe.

5. The multilayer plastic pipe of claim 4, wherein at least one electrical generator and the at least one electric current measuring instrument are electrically connected in series to the solid conductor.

6. The multilayer plastic pipe of claim 4 or 5 further comprising at least one active plastic pipe joint comprising means for electrically connecting the at least one layer of conductive material in series or in parallel to at least one electrical generator and to at least one electric current measuring instrument and electric connecting means for electrically connecting in series or in parallel the at least one electrical generator and at least one electric current measuring instrument to a fluid present inside the pipe.

7. A self-diagnostic network of pipes comprising a plurality of multilayer plastic pipes, each multilayer plastic pipe comprising at least one inner layer of plastic material, at least one layer of a conductive material adhered to said inner layer and at least one further plastic layer adhered to the surface of the conductive material opposite to the surface adhered to the inner plastic layer wherein the multilayer plastic pipes are joined with an active plastic joint comprising means for electrically connecting in series or in parallel the at least one layer of conductive material of at least two multilayer plastic pipes to at least one electrical generator and to at least one electric current measuring instrument and electric connecting means for electrically connecting in series or in parallel the at least one electrical generator and at least one electric current measuring instrument to a fluid conductor present inside the pipe.

8. A self-diagnostic network of pipes comprising at least two multilayer plastic pipes comprising at least one inner layer of plastic material, at least one layer of a conductive material adhered to said inner layer and at least one further plastic layer adhered to the surface of the solid conductor opposite to the surface adhered to the inner plastic layer, said multilayer plastic pipes further comprising at least one active plastic pipe joint comprising means for electrically connecting the at least one layer of conductive material of the at least two multilayer plastic pipes in series or in parallel to at least one electrical generator and to at least one electric current measuring instrument and means for electrically connecting in series or in parallel the at least one electrical generator and at least one electric current measuring instrument to a fluid conductor present inside the pipe, said multilayer plastic pipes being joined to a plurality of multilayer plastic pipes joined with passive pipe joints.

Figure 1A

Figure 1B

Figure 1C

Figure 2

**EP 1 865 300 A1**

**European Patent Office**

## EUROPEAN SEARCH REPORT

Application Number

EP 06 11 5064

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 100 24 478 A1 (RINGHOFER ROBOTICS ROHRSANIERU [AT]) 15 February 2001 (2001-02-15) | 1-6 | INV. G01M3/18 |
| Y | * column 2, line 44 - column 4, line 63; figures 1-4 * | 7,8 | |
| D,Y | WO 03/076890 A (HONG IN SIK [KR]; HA SEUNG SOO [KR]) 18 September 2003 (2003-09-18) * page 29, line 10 - page 30, line 21; figure 10 * | 7,8 | |
| X | DE 41 37 108 A1 (HENZE GMBH KUNSTSTOFFWERK [DE]) 27 May 1992 (1992-05-27) | 1-6 | |
| Y | * column 6, line 23 - column 8, line 9; figures 1,7 * | 7,8 | |
| Y | EP 0 417 061 A1 (SCHEUERMANN HERBERT DIPL ING [AT] BRANDES BERND [DE]) 13 March 1991 (1991-03-13) * page 7, line 11 - page 7, line 19; figure 7 * | 7,8 | |
| | | | TECHNICAL FIELDS SEARCHED (IPC) |
| X | DE 198 41 317 C1 (HERGENROETHER DIRK [DE]; ORPHEUS GEOPHYSIK GES FUER BAU [DE]) 17 February 2000 (2000-02-17) * column 5, line 49 - column 6, line 32; figure 1 * | 1-6 | G01M |
| X | EP 0 533 960 A1 (BRANDES BERND [DE]) 31 March 1993 (1993-03-31) * column 2, line 53 - column 4, line 38; figures 1-4 * | 1-6 | |

The present search report has been drawn up for all claims

| Place of search | Date of completion of the search | Examiner |
|---|---|---|
| The Hague | 31 October 2006 | Gruss, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

**ANNEX TO THE EUROPEAN SEARCH REPORT
ON EUROPEAN PATENT APPLICATION NO.** EP 06 11 5064

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2006

| Patent document cited in search report | | Publication date | Patent family member(s) | | Publication date |
|---|---|---|---|---|---|
| DE 10024478 | A1 | 15-02-2001 | AT | 90799 A | 15-10-2002 |
| WO 03076890 | A | 18-09-2003 | AU 2002306137 A1<br>CN 1625682 A<br>KR 2003074855 A<br>US 2004098212 A1 | | 22-09-2003<br>08-06-2005<br>22-09-2003<br>20-05-2004 |
| DE 4137108 | A1 | 27-05-1992 | NONE | | |
| EP 0417061 | A1 | 13-03-1991 | AT 102347 T<br>DE 59004755 D1 | | 15-03-1994<br>07-04-1994 |
| DE 19841317 | C1 | 17-02-2000 | EP 1099946 A1 | | 16-05-2001 |
| EP 0533960 | A1 | 31-03-1993 | AT 112847 T<br>DE 59103240 D1<br>DK 533960 T3 | | 15-10-1994<br>17-11-1994<br>30-01-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03076890 A

- US 6265880 B